# EUROPEAN PATENT SPECIFICATION

(11) **EP 2 741 618 B1**
(45) Date of publication and mention of the grant of the patent: **23.09.2020**
(21) Application number: 12744007.1
(22) Date of filing: 10.08.2012
(51) Int. Cl.: A23L 2/52, A23L 2/58, A23L 29/10, A23L 33/105, A23L 5/44

(54) **EMULSIONS COMPRISING CAROTENOID FOR TRANSPARENT AND PASTEURIZATION-STABLE LIQUID FORMULATIONS, ESPECIALLY BEVERAGES**
CAROTINOIDEMULSIONEN FÜR TRANSPARENTE UND PASTEURISIERUNGSSTABILE FLÜSSIGE FORMULIERUNGEN, INSBESONDERE GETRÄNKE
ÉMULSIONS DE CAROTÉNOÏDE POUR FORMULATIONS LIQUIDES STABLES À LA PASTEURISATION, SPÉCIALEMENT LES BOISSONS

(30) Priority: 11.08.2011 EP 11177316
(43) Date of publication of application: 18.06.2014
(73) Proprietor: DSM IP Assets B.V., 6411 TE Heerlen (NL)
(72) Inventor: BADOLATO BÖNISCH, Gabriela, CH-4002 Basel (CH); GRASS, Hansjoerg, CH-4002 Basel (CH)
(74) Representative: Kurt, Manfred
(86) International application number: PCT/EP2012/065652
(87) International publication number: WO 2013/021041

(56) References cited:
- EP-A1- 1 927 287
- EP-A1- 2 345 336
- WO-A1-94/06310
- WO-A1-97/10725
- WO-A1-2007/047237
- WO-A2-2010/063447
- FR-A1- 2 221 499
- DATABASE WPI Week 200958 Thomson Scientific, London, GB; AN 2009-M92597 XP002662853, & JP 2009 189335 A (SANEIGEN FFI KK) 27 August 2009 (2009-08-27)

## Description

The present invention relates to stable emulsions comprising at least one carotenoid, which - when used in liquid formulations (especially beverages, such as soft drinks) - allows to obtain transparent formulations (even after pasteurization).

Carotenoids can be used as colorants. The carotenoids can be obtained from a natural source, by fermentation or by chemical synthesis.

EP 2 345 336 A1 discloses a composition that comprises: (a) at least one dye; (b) at least one first emulsifier comprising polysorbate; and (c) at least one second emulsifier comprising esters of mono- and diglycerides of edible fatty acids. WO 97/10725 A1 discloses compositions that include an oil soluble ingredient and a primary and a secondary surfactant which follow specific ratios of oil soluble ingredient to emulsifier and specific ratios of primary to cosurfactant. EP 1 927 287 A1 discloses an emulsion composition that includes a phospholipid, an oil-based component and a surfactant, wherein the content of the surfactant exceeds 0.5 times by weight the content of the oil-based component and exceeds 5 times by weight the content of the phospholipid. WO 94/06310 A1 discloses an aqueous composition for the preparation of optically clear products for use in human or animal healthcare comprising 0.1 to 2.0 % w/w of an oil-soluble ingredient as a 20-30 % w/w dispersion in a suitable oil. WO 2007/047237 A1 discloses oil-in-water microemulsions which can be used to incorporate lipophilic water-insoluble materials, such as beta-carotene, into food and beverage compositions.

The use of carotenoid(s) in liquid formulations is well known. But to provide an emulsion comprising at least one carotenoid, which allows to prepare a clear (non-turbid, non-opaque) and pasteurization-stable formulation (especially beverages, such as soft drinks) is not yet achieved in a satisfying manner.

Usually after the pasteurization step such formulations are getting very turbid, so that they are not transparent anymore.

For the use in many liquid formulations, such as beverages (i.e. soft drinks), a transparent form is desired for marketing reasons.

Therefore the goal of the present invention was to find an emulsion, which does not have the above mentioned disadvantages.

The usual process for producing liquid formulations (i.e. soft drinks) is that the carotinoid is emulsified in a first step. Afterwards this emulsion is incorporated into a liquid formulation.

Surprisingly, it has been found that when the carotenoid is emulsified with a specific emulsifier system an emulsion is obtained, which can be used in liquid (aqueous) formulations, which are then pasteurization-stable and transparent (after pasteurization).

The present invention relates to an emulsion comprising 1.5 to 4 wt-%, based on the total weight of the emulsion, of at least one carotenoid, chosen from the group consisting of β-carotene and 8'-apo-p-carotenal and

8 to 31 wt-%, based on the total weight of the emulsion, of an emulsifier mixture, and

3 to 8 wt-%, based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and

0 to 1 wt-%, based on the total weight of the emulsion, of at least one antioxidant chosen from the group consisting of ascorbic acid, tocopherol (synthetic or natural), butylated hydroxytoluene (BHT), butylated hydroxyanisole (BHA), propyl gallate, tert. butyl hydroxyquinoline and ascorbic acid esters of a fatty acid, (preferably dl-alpha-tocopherol), and

56 to 87.5 wt-%, based on the total weight of the emulsion, of water, characterized in that the mixture of emulsifiers comprises
(a) at least one polyoxyethylene sorbitan monofatty acid ester and
(b) at least one other emulsifier having a HLB value of at least 6, and wherein
   (i) the ratio of carotenoid : polyoxyethylene sorbitan monofatty acid ester is 1:5 to 1:6.5 and
   (ii) emulsifier (b) is present in amount of 0.5 - 5 wt%, based on the total weight of the emulsion, and wherein the mixture of emulsifiers comprises
      (I) 80 to 98 wt-%, based on the total weight of the emulsifier mixture, of at least one polyoxyethylene sorbitan monofatty acid ester and
      (II) 2 to 20 wt-%, based on the total weight of the emulsifier mixture, of at least one other (not a polyoxyethylene sorbitan monofatty acid) emulsifier with a HLB value of at least 6.

Herein disclosed is an emulsion comprising

| | |
|---|---|
| 0.5 to 8 weight-% (wt-%), | based on the total weight of the emulsion, of at least one |
| | carotenoid, and |
| 3 to 57 wt-%, | based on the total weight of the emulsion, of an emulsifier mixture, and |
| 1 to 16 wt-%, | based on the total weight of the emulsion, of at least one oil, and |
| 0 to 1 wt-%, | based on the total weight of the emulsion, of at least one antioxidant, and |
| 18 to 95.5 wt-%, | based on the total weight of the emulsion, of water, |

characterized in that the mixture of emulsifiers comprises
(a) at least one polyoxyethylene sorbitan monofatty acid ester (=emulsifier (a)) and
(b) at least one emulsifier (no polyoxyethylene sorbitan monofatty acid ester) having a HLB value of at least 6 (preferably at least 6.5, more preferably at least 7) (=emulsifier (b)),
and wherein
(i) the ratio of carotenoid : polyoxyethylene sorbitan monofatty acid ester is 1:5 to 1:6.5 and
(ii) at least one other emulsifier (b) is present in an amount of 0.5 to 5 wt-%, based on the total weight of the emulsion, and
(iii) the amount of the least one emulsifier (a) is at least 4 times higher that the amount of the least one emulsifier (b).

All the percentages are always add up to 100. This requirements obviously applies for all the emulsions, formulations and mixture in the present patent application.

The term "carotenoid" as used herein comprises a natural or synthetic carotene or structurally related polyene compound which can be used as a functional health ingredient or colorant for food, such as α- or β-carotene, 8'-apo-β-carotenal, 8'-apo-β-carotenoic acid esters such as the ethyl ester, canthaxanthin, astaxanthin, lycopene, lutein, zeaxanthin or crocetin, or mixtures thereof. The preferred carotenoids are β-carotene, 8'-apo-β-carotenal, lycopene and lutein and mixtures thereof, especially β-carotene and 8'-apo-β-carotenal, most preferably 8'-apo-β-carotenal.

The present invention relates to an emulsion as described above, wherein at least one carotenoid is chosen from the group consisting of β-carotene and 8'-apo-β-carotenal, most preferably 8'-apo-β-carotenal.

An emulsion according to the present invention comprises 1.5 to 4 wt-%, based on the total weight of the emulsion, of at least one carotenoid.

An emulsion according to the present invention comprises 8 to 31 wt-%, based on the total weight of the emulsion, of an emulsifier mixture.

The emulsifier mixture used in an emulsion according to the present invention comprises at least two emulsifiers (at least one emulsifier (a) and at least one emulsifier (b)). At least one polyoxyethylene sorbitan monofatty acid ester is always part of the mixture (=emulsifier (a)). The other emulsifier (or emulsifiers) is at least another (not a polyoxyethylene sorbitan monofatty acid ester) emulsifier with a HLB of at least 6 (preferably at least 6.5, more preferably at least 7) (=emulsifier (b)).

Emulsifier (a): Preferably the polyoxyethylene sorbitan monofatty acid ester is chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate. These polyoxyethylene sorbitan monofatty acid esters are also known as Polysorbate 20 (Tween 20®), Polysorbate 40 (Tween 40®), Polysorbate 60 (Tween 60®) and Polysorbate 80 (Tween 80®). These compounds are available commercially.

The emulsifier (b) (or mixture of emulsifiers) having a HLB value of at least 6 (preferably at least 6.5, more preferably at least 7) is present in an amount of 0.5 to 5 wt-%, preferably, 1 to 4.5 wt-%, more preferably, 2 to 4.5 wt-%, based on the total weight of the emulsion.

Preferably the emulsifier having a HLB value of at least 6 (preferably at least 6.5, more preferably at least 7) is chosen from the group consisting of lecithin and polyglycerolesters of fatty acids.

The lecithin is usually a mixture of various phospholipids, whereas its composition depends on the origin of the lecithin. A major source of lecithin is i.e. soybean oil and sunflower oil.

The emulsifier mixture used in the emulsions according to the present invention comprises
(a) 80 to 98 wt-%, based on the total weight of the emulsifier mixture, of at least one polyoxyethylene sorbitan monofatty acid ester and
(b) 2 to 20 wt-%, based on the total weight of the emulsifier mixture, of at least one other (not a polyoxyethylene sorbitan monofatty acid ester) emulsifier with a HLB value of at least 6 (preferably at least 6.5, more preferably at least 7).

Preferably the emulsifier mixture comprises
(a) 80 to 98 wt-%, based on the total weight of the emulsifier mixture, of at least one polyoxyethylene sorbitan monofatty acid ester chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate and
(b) 2 to 20 wt-%, based on the total weight of the emulsifier mixture, of at least one emulsifier with a HLB value of at least 6 (preferably at least 6.5, more preferably at least 7) chosen from the group consisting of lecithin and polyglycerolesters of fatty acids.

An emulsion according to the present invention comprises at least one oil (one kind of oil or a mixture of oils).

The oils can be from any origin. They can be natural, modified or synthetic. If the oils are natural they can be plant or animal oils. Suitable oils are i.e. MCT (medium chain triglycerides), coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil or polyunsaturated fatty acids (such as triglyceride and/or ethyl ester (for example arachidonic acid, eicosapentaenoic acid, docosahexaenoic acid and γ-linolenic acid and/or ethyl ester).

An emulsion according to the present invention comprises 3 to 8 wt-%, based on the total weight of the emulsion, of at least one oil.

The emulsion can (optionally) contain at least one antioxidant, such as ascorbic acid or salts thereof, (synthetic or natural) tocopherol (i.e. dl-alpha-tocopherol); butylated hydroxytoluene (BHT); butylated hydroxyanisole (BHA); propyl gallate; tert. butyl hydroxyquinoline and/or ascorbic acid esters of a fatty acid). The preferred antioxidant is tocopherol (i.e. dl-alpha-tocopherol). When at least one antioxidant is used then in an amount of 0.01 to 1 wt-%, preferably 0.5 to 0.8 wt-%, based on the total weight of the emulsion.

Furthermore the emulsion can contain further ingredients such as ethoxyquin, plasticizers, preservatives (such as sorbic acid and its salts), stabilizers, acids (such as citric acid, acetic acid as well as their salts), humectants (such as glycerol, sorbitol, polyethylene glycol) protective colloids, dyes, fragrances, fillers and pH-buffers.

Herein disclosed is an emulsion (I) comprising

| | |
|---|---|
| 0.5 to 8 wt-%, | based on the total weight of the emulsion, of at least one carotenoid, chosen from the group consisting of α-carotene, β-carotene, 8'-apo-β-carotenal, 8'-apo-β-carotenoic acid esters, canthaxanthin, astaxanthin, lycopene, lutein, zeaxanthin and crocetin, (preferably β-carotene and 8'-apo-β-carotenal) and |
| 3 to 57 wt-%, | based on the total weight of the emulsion, of an emulsifier mixture, and |
| 1 to 16 wt-%, | based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and |
| 0 to 1 wt-%, | based on the total weight of the emulsion, of at least one antioxidant chosen from the group consisting of ascorbic acid, tocopherol, butylated hydroxytoluene (BHT), butylated hydroxyanisole (BHA), propyl gallate, tert. butyl hydroxyquinoline and ascorbic acid esters of a fatty acid, (preferably dl-alpha-tocopherol), and |
| 18 to 95.5 wt-%, | based on the total weight of the emulsion, of water, |

characterized in that the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(ii) the emulsifier (b) is present in amount of 0.5 to 5 wt-%, based on the total weight of the emulsion.
and wherein the mixture of emulsifiers comprises
(I) 80 to 98 wt-%, based on the total weight of the emulsifier mixture, of at least one polyoxyethylene sorbitan monofatty acid ester and
(II) 2 to 20 wt-%, based on the total weight of the emulsifier mixture, of at least one other (not a polyoxyethylene sorbitan monofatty acid ester) emulsifier with a HLB value of at least 6 (preferably at least 6.5, more preferably at least 7).

A preferred emulsion (I') is emulsion (I), wherein the mixture of emulsifiers comprises
(I) 80 to 98 wt-%, based on the total weight of the emulsifier mixture, of at least one polyoxyethylene sorbitan monofatty acid ester chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate and
(II) 2 to 20 wt-%, based on the total weight of the emulsifier mixture, of at least one emulsifier with a HLB value of at least 6 (preferably at least 6.5, more preferably at least 7) chosen from the group consisting of lecithin and polyglycerolesters of fatty acids.

Also disclosed is emulsion (II) comprising

| | |
|---|---|
| 0.5 to 5 wt-%, | based on the total weight of the emulsion, of at least one carotenoid, chosen from the group consisting of α-carotene, β-carotene, 8'-apo-β-carotenal, 8'-apo-β-carotenoic acid esters, canthaxanthin, astaxanthin, lycopene, lutein, zeaxanthin and crocetin, (preferably β-carotene and 8'-apo-β-carotenal) and |
| 3 to 37.5 wt-%, | based on the total weight of the emulsion, of an emulsifier mixture, and |
| 1 to 10 wt-%, | based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and |
| 0 to 1 wt-%, | based on the total weight of the emulsion, of at least one antioxidant chosen from the group consisting of ascorbic acid, tocopherol (preferred dl-alpha-tocopherol), butylated hydroxytoluene (BHT), butylated hydroxyanisole (BHA), propyl gallate, tert. butyl hydroxyquinoline and ascorbic acid esters of a fatty acid, (preferably dl-alpha-tocopherol), and |
| 46.5 to 95.5 wt-%, | based on the total weight of the emulsion, of water, |

characterized in that
the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(ii) the emulsifier (b) is present in amount of 0.5 to 5 wt-%, based on the total weight of the emulsion,
and wherein the mixture of emulsifiers comprises
(I) 80 to 98 wt-%, based on the total weight of the emulsifier mixture, of at least one polyoxyethylene sorbitan monofatty acid ester and
(II) 2 to 20 wt-%, based on the total weight of the emulsifier mixture, of at least one other (not a polyoxyethylene sorbitan monofatty acid ester) emulsifier with a HLB value of at least 6 (preferably at least 6.5, more preferably at least 7).

A preferred emulsion (II') is emulsion (II), wherein the mixture of emulsifiers comprises
(a) 80 to 98 wt-%, based on the total weight of the emulsifier mixture, of at least one polyoxyethylene sorbitan monofatty acid ester chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate and
(b) 2 to 20 wt-%, based on the total weight of the emulsifier mixture, of at least one emulsifier with a HLB value of at least 6 (preferably at least 6.5, more preferably at least 7) chosen from the group consisting of lecithin and polyglycerolesters of fatty acids.

Also disclosed is emulsion (III) comprising

| | |
|---|---|
| 1 to 5 wt-%, | based on the total weight of the emulsion, of at least one carotenoid, chosen from the group consisting of α-carotene, β-carotene, 8'-apo-β-carotenal, 8'-apo-β-carotenoic acid esters, canthaxanthin, astaxanthin, lycopene, lutein, zeaxanthin and crocetin, (preferably β-carotene and 8'-apo-β-carotenal) and |
| 5.5 to 37.5 wt-%, | based on the total weight of the emulsion, of an emulsifier mixture, and |
| 2 to 10 wt-%, | based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and |
| 0 to 1 wt-%, | based on the total weight of the emulsion, of at least one antioxidant chosen from the group consisting of ascorbic acid, tocopherol (synthetic or natural), butylated hydroxytoluene (BHT), butylated hydroxy-anisole (BHA), propyl gallate, tert. butyl hydroxyquinoline and ascorbic acid esters of a fatty acid, (preferably dl-alpha-tocopherol), and |
| 46.5 to 91.5 wt-%, | based on the total weight of the emulsion, of water, |

characterized in that the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(ii) emulsifier (b) is present in amount of 0.5 to 5 wt-%, based on the total weight of the emulsion,
and wherein the mixture of emulsifiers comprises
(I) 80 to 98 wt-%, based on the total weight of the emulsifier mixture, of at least one polyoxyethylene sorbitan monofatty acid ester and
(II) 2 to 20 wt-%, based on the total weight of the emulsifier mixture, of at least one other (not a polyoxyethylene sorbitan monofatty acid ester) emulsifier with a HLB value of at least 6 (preferably at least 6.5, more preferably at least 7).

A preferred emulsion (III') is emulsion (III), wherein the mixture of emulsifiers comprises
(a) 80 to 98 wt-%, based on the total weight of the emulsifier mixture, of at least one polyoxyethylene sorbitan monofatty acid ester chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate and
(b) 2 to 20 wt-%, based on the total weight of the emulsifier mixture, of at least one emulsifier with a HLB value of at least 6 (preferably at least 6.5, more preferably at least 7) chosen from the group consisting of lecithin and polyglycerolesters of fatty acids.

The present invention relates to an emulsion (IV) comprising

| | |
|---|---|
| 1.5 to 4 wt-%, | based on the total weight of the emulsion, of at least one carotenoid, chosen from the groups consisting of β-carotene and 8'-apo-β-carotenal and |
| 8 to 31 wt-%, | based on the total weight of the emulsion, of an emulsifier mixture, and |
| 3 to 8 wt-%, | based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and |
| 0 to 1 wt-%, | based on the total weight of the emulsion, of at least one antioxidant chosen from the group consisting of ascorbic acid, tocopherol (synthetic or natural), butylated hydroxytoluene (BHT), butylated hydroxyanisole (BHA), propyl gallate, tert. butyl hydroxyquinoline and ascorbic acid esters of a fatty acid, (preferably dl-alpha-tocopherol), and |
| 56 to 87.5 wt-%, | based on the total weight of the emulsion, of water, |

characterized in that
the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(iii) emulsifier (b) is present in amount of 0.5 - 5 wt-%, based on the total weight of the emulsion,
and wherein the mixture of emulsifiers comprises
(I) 80 to 98 wt-%, based on the total weight of the emulsifier mixture, of at least one polyoxyethylene sorbitan monofatty acid ester and
(II) 2 to 20 wt-%, based on the total weight of the emulsifier mixture, of at least one other (not a polyoxyethylene sorbitan monofatty acid) emulsifier with a HLB value of at least 6 (preferably at least 6.5, more preferably at least 7).

Preferred emulsions (IV') are emulsion (IV), wherein the mixture of emulsifiers comprises
(a) 80 to 98 wt-%, based on the total weight of the emulsifier mixture, of at least one polyoxyethylene sorbitan monofatty acid ester chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate and
(b) 2 to 20 wt-%, based on the total weight of the emulsifier mixture, of at least one emulsifier with a HLB value of 8 to 18 chosen from the group consisting of lecithin and polyglycerolesters of fatty acids.

The above disclosed and described emulsions are used in liquid formulations, such as beverages (especially soft drinks). The emulsions are usually used in such an amount that the total amount of the carotenoid compound(s) in the liquid formulations is 1 to 20 ppm.

Therefore also disclosed is the use of at least one emulsion comprising

| | |
|---|---|
| 0.5 to 8 wt-%, | based on the total weight of the emulsion, of at least one carotenoid, and |
| 3.0 to 57 wt-%, | based on the total weight of the emulsion, of an emulsifier mixture, and |
| 1 to 16 wt-%, | based on the total weight of the emulsion, of at least one oil, and |
| 0 to 1 wt-%, | based on the total weight of the emulsion, of at least one antioxidant, and |
| 18 to 95.5 wt-%, | based on the total weight of the emulsion, of water, |

characterized in that the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(ii) the emulsifier (b) is present in amount of 0.5 - 5 wt-%, based on the total weight of the emulsion,
in a liquid formulation (preferably a beverage, such as a soft drink).

All preferences as described above for the emulsions apply to their use as well. Disclosed uses are those wherein emulsion (I), (I'), (II), (II'), (III), (III'), (IV) and/or (IV') are used.

Further disclosed are liquid formulations (LF) comprising at least one emulsion comprising

| | |
|---|---|
| 0.5 to 8 wt-%, | based on the total weight of the emulsion, of at least one carotenoid, and |
| 3.0 to 57 wt-%, | based on the total weight of the emulsion, of an emulsifier mixture, and |
| 1 to 16 wt-%, | based on the total weight of the emulsion, of at least one oil, and |
| 0 to 1 wt-%, | based on the total weight of the emulsion, of at least one antioxidant, and |
| 18 to 95.5 wt-%, | based on the total weight of the emulsion, of water, |

characterized in that the mixture of emulsifiers comprises
(a) at least one polyoxyethylene sorbitan monofatty acid ester and
(b) at least one other emulsifier having a HLB value of at least 6 (preferably at least 6.5, more preferably at least 7),
and wherein
(i) the ratio of carotenoid : polyoxyethylene sorbitan monofatty acid ester is 1:5 to 1:6.5 and
(ii) the emulsifier (b) is present in amount of 0.5 - 5 wt-%, based on the total weight of the emulsion.

All preferences as described above for the emulsions apply to the liquid formulations as well.

Disclosed liquid formulations are those comprising emulsion (I), (I'), (II), (II'), (III), (III'), (IV) and/or (IV').

The liquid formulations (LF') of the invention comprises (IV) and/or (IV') and wherein the carotenoid content in LF' is 1 - 20 ppm.

Preferred liquid formulations (LF") are liquid formulations (LF) and (LF'), which is a beverage (preferably a soft drink).

Preferably, the beverage (preferably a soft drink) is clear and pasteurized.

The process of preparing these formulations is done according to well known processes. The process involves a pasteurization step after which the liquid transparent formulation is not getting turbid, even after some storage time.

Furthermore, due to the fact that the amount of polyoxyethylene sorbitan monofatty acid ester is reduced, an improved sensory of the soft drinks is achieved.

The turbidity of the liquid, transparent and non-pasteurized formulations and of the liquid, transparent pasteurized formulations comprising at least one of the above described emulsions is less than 10 NTU (for a 10ppm carotenoid concentration).

The measurement of the turbidity is done by using standard methods (EN27027(ISO7027). All the measurements for this patent application are done by using a turbiditymeter Hach 2100N IS® from Hach Company, Loveland, Colorado (USA). The turbidity is given in nephelometric turbidity units (NTU). The measurement angle was 90° +-2,5° and the measurement wavelength was: 860nm +-10nm LED. The measurements were done at room temperature.

The following examples serve to illustrate the invention. All percentages and parts are related to weight and the temperature is given in degree Celsius, if not otherwise stated.

### Examples

In a first step the oil-in-water-emulsion is prepared.

### Examples 1a to 1c: Emulsions comprising apocarotenal

All the emulsions (1a to 1c), which are listed in Table 1 are prepared according to the following procedure:
A mixture of medium-chain triglycerides (MCT) and dl-alpha-tocopherol was warmed up to 135 °C. Apoacarotenal (crystal form) was added within 5 minutes to the mixture. The mixture was stirred for 10 minutes and a clear solution was obtained. The clear solution was then cooled down to 105 °C under stirring (*solution 1*).

In another vessel, a mixture of Tween 80 (Lamesorb SMO 20 from Cognis, Germany, HLB value 15) and Polyglycerolesters of fatty acids (Polyglycerol esters of fatty acid EREZ Z from Sharon Laboratories Ltd, Israel, HLB value 7) was warmed up to 60 °C under stirring.

Solution 1 (105 °C) was then added to the Tween 80/Polyglycerolesters of fatty acids mixture (60°C) under stirring (*solution* 2). Solution 2 was poured into deionised water (60 °C) under stirring with Rotor/Stator emulsification system during 1 to 2 minutes at approx. 60 °C. The emulsion was cooled down to room temperature under stirring.

**Table 1a: Emulsions comprising apocarotenal**

| **Ingredients/Exp. No.** | **1a** | **1b** | **1c** |
|---|---|---|---|
| Apocarotenal cryst. | 3.2 % | 3.2 % | 3.2 % |
| dl-α-Tocopherol | 0.3 % | 0.3 % | 0.3 % |
| MCT (Medium-chain triglyceride) | 7.5 % | 7.5 % | 7.5 % |
| Tween 80 | 17.0 % | 17.0 % | 17.0 % |
| Polyglycerolesters of fatty acids | 2.5 % | 2.5 % | 2.5 % |
| Water | 69.5 % | 68.9 % | 68.8 % |
| Citric acid | -------- | 0.6 % | 0.6 % |
| Potassium sorbate | -------- | -------- | 0.1 % |

### Examples 2a to 2b: Emulsions comprising β-carotene

All the emulsions (2a to 2b), which are listed in Table 2, are prepared according to the following procedure:
A mixture of medium-chain triglycerides (MCT) and dl-alpha-tocopherol was warmed up to 165 °C. β-carotene (crystal form) was added within 5 minutes to the mixture. The mixture was stirred for 10 minutes and a clear solution was obtained. The clear solution was then cooled down to 105 °C under stirring (*solution 1*).

In another vessel, a mixture of Tween 80 (Lamesorb SMO 20 from Cognis, Germany, HLB value 15) and Polyglycerolesters of fatty acids (Polyglycerol esters of fatty acid EREZ Z from Sharon Laboratories Ltd, Israel, HLB value 7) was warmed up to 60 °C under stirring.

Solution 1 (105 °C) was then added to the Tween 80/Polyglycerolesters of fatty acids mixture (60 °C) under stirring (*solution* 2). Solution 2 was poured into deionised water (60 °C) under stirring with Rotor/Stator emulsification system during 1 to 2 minutes at approx. 60 °C. The emulsion was cooled down to room temperature under stirring.

**Table 2a: Emulsions comprising β-carotene**

| **Ingredients/ Exp. No.** | **2a** | **2b** |
|---|---|---|
| β-Carotene cryst. | 3.2 % | 3.2 % |
| dl-α-Tocopherol | 0.3 % | 0.3 % |
| MCT (Medium-chain triglyceride) | 7.5 % | 7.5 % |
| Tween 80 | 17.0 % | 17.0 % |
| Polyglycerolesters of fatty acids | 2.5 % | 2.5 % |
| Water | 68.9 % | 69.15 % |
| Citric acid | 0.6 % | 0.25 % |
| Potassium sorbate | -------- | 0.1 % |

### Examples 3 and 4: Formulations Examples

The following examples are those wherein the emulsions of the previous examples was used in a liquid formulation. In a first set of tests aqueous formulations were prepared and in second set of test beverage formulations were prepared.

For the following examples the two liquid aqueous formulations were produced. One wherein the content of the carotenoid compound was 5 ppm and a second one with a content of 10 ppm. All formulations were produced by adding the emulsion into water
The turbidity was measured after the preparation.

### Examples 3a to 3c': Liquid formulations comprising emulsion 1a to 1c

**Table 3a: Formulations comprising the emulsions of Example 1a and 1b**

| **Example** | **3a (emuls. 1a)** | **3a' (emuls. 1a)** | **3b (emuls. 1b)** | **3b' (emuls. 1b)** |
|---|---|---|---|---|
| Apocarotenal content | 5ppm | 10ppm | 5ppm | 10ppm |
| Turbidity | 0.8 NTU | 1.4 NTU | 0.7 NTU | 1.5 NTU |

**Table 3b: Formulations comprising the emulsions of Example 1c**

| **Example** | **3c (emuls. 1c)** | **3c' (emuls. 1c)** |
|---|---|---|
| Apocarotenal content | 5ppm | 10ppm |
| Turbidity | 0.8 NTU | 1.6 NTU |

### Examples 4a to 4b': Liquid formulations comprising emulsion 2a to 2b

**Table 4a: Formulations comprising the emulsions of Example 2a and 2b**

| **Example** | **4a (emuls. 2a)** | **4a' (emuls. 2a)** | **4b (emuls. 2b)** | **4b' (emuls. 2b)** |
|---|---|---|---|---|
| β-carotene content | 5 ppm | 10 ppm | 5 ppm | 10 ppm |
| Turbidity | 1.0 NTU | 1.8 NTU | 1.0 NTU | 2.0 NTU |

### Example 5: Soft Drinks Formulations (Carotenoid content 10ppm)

The emulsions of Example 1 and 2 were also incorporated into a soft drink formulation.

The soft drink formulation for all the following examples is listed in table 5:

**Table 5: Soft drink formulations**

| **Ingredients** | **g** |
|---|---|
| Potassium sorbate | 0.2 |
| Sugar syrup (64 °Brix) | 156.2 |
| Ascorbic acid | 0.2 |
| Citric acid 50 % w/w | 5.0 |
| Apricot flavour (water soluble, Givaudan 78848-56) | 0.2 |
| Emulsions of Examples 1 or 2 | 0.313 |
| Drink water | to 1000 g |

The formulations comprising the emulsion were prepared in the following way:
- Dissolve potassium sorbate in water.
- Add sugar syrup, ascorbic acid, citric acid, flavour, and the emulsion of example 1 or 2 one after the other while stirring gently. It is advantageous to dilute the emulsion before adding.

Pasteurization:
Pasteurization of the soft drink formulation was conducted in a bath of water. The bottles (glass blottles/200 ml) were placed in an 85 °C water bath. After reaching 80 °C, samples remained in the water bath for 1 additional minute. A reference bottle containing water and a thermometer was used for the control of the temperature during pasteurization. After pasteurization bottles are quickly cooled (using cold water) to room temperature.

The turbidity was measured by using a turbiditymeter Hach 2100N IS® from Hach Company, Loveland, Colorado (USA). The turbidity is given in nephelometric turbidity units (NTU). The measurement angle was 90° +-2,5° and the measurement wavelength was: 860nm +-10nm LED. The measurements were done at room temperature.

**Table 6: Turbidity of the soft drink formulations comprising emulsions 1a to 2b (carotenoid content 10ppm)**

| **Example** | **5a (emul. 1a)** | **5b (emul. 1b)** | **5c (emul. 1c)** | **5d (emul. 2a)** | **5e (emul. 2b)** |
|---|---|---|---|---|---|
| **Turbidity [NTU] non-past.** | 3.1 | 2.6 | 2.9 | 2.6 | 2.6 |
| **Turbidity [NTU] past.** | 1.9 | 1.9 | 1.9 | 2.4 | 2.5 |
| **Turbidity [NTU] non-past. after 1 month** | 3.8 | 3.5 | 3.5 | 2.4 | 2.3 |
| **Turbidity [NTU] past. after 1 month** | 2.8 | 3.4 | 3.3 | 2.7 | 2.5 |
| **Turbidity [NTU] non-past. after 3 months** | 5.5 | 5.4 | 5.7 | 2.8 | 2.7 |
| **Turbidity [NTU] past. after 3 months** | 4.1 | 5.1 | 4.9 | 2.9 | 2.7 |

All the soft drink formulations comprising the emulsions according to the present invention showed very low turbidity.

### Example 6: Comparative example with apocarotenal

To demonstrate the inventive step of the present invention similar emulsions (but without emulsifier mixture) were prepared and tested.

The soft drink formulation used is the same as listed in table 5.

**Table 7: Emulsions comprising apocarotenal and no polyglycerolesters of fatty acids**

| **Ingredients/Exp. No.** | **6** | **6a** |
|---|---|---|
| Apocarotenal cryst. | 3.2 % | 3.2 % |
| dl-α-Tocopherol | 0.3 % | 0.3 % |
| MCT (Medium-chain triglyceride) | 7.5 % | 7.5 % |
| Tween 80 | 17.0 % | 19.5 % |
| ***Polyglycerolesters of fatty acids*** | ----- | ----- |
| Water | 72.0% | 68.9% |
| Citric acid | ----- | 0.6% |

**Table 8: Turbidity of the soft drink formulations comprising emulsion 6 (carotenoid content 10ppm) emulsion 6a (carotenoid content 10ppm)**

| **Example** | **7 (emul. 6)** | **7a (emul. 6a)** |
|---|---|---|
| **Turbidity [NTU] non-past.** | 4.7 | 6.4 |
| **Turbidity [NTU] past.** | ***18.6*** | ***11.0*** |
| **Turbidity [NTU] non-past**. **after 1 month** | 4.4 | 7.5 |
| **Turbidity [NTU] non-past. after 3 months** | 6.3 | 9.6 |
| **Turbidity [NTU] past. after 1 month** | *21.5* | *14.7* |
| **Turbidity [NTU] past. after 3 months** | *30.8* | 17.6 |

It can be seen that the turbidity (especially after the pasteurization) is significantly higher in comparison to the soft drinks comprising the emulsion of the present invention.

### Example 7: Comparative example with β-carotene

To demonstrate the inventive step of the present invention similar emulsions (but without emulsifier mixture) were prepared and tested.

The soft drink formulation used is the same as listed in table 5.

**Table 9: Emulsions comprising β-carotene and no polyglycerolesters of fatty acids**

| **Ingredients/Exp. No.** | **7** |
|---|---|
| *β-carotene* | 3.2 % |
| dl-α-Tocopherol | 0.3 % |
| MCT (Medium-chain triglyceride) | 7.5 % |
| Tween 80 | 17.0 % |
| ***Polyglycerolesters of fatty acids*** | **----** |
| Water | 72.0% |

**Table 10: Turbidity of the soft drink formulations comprising emulsion 7 (carotenoid content 10ppm)**

| **Example** | **8 (emul. 7)** |
|---|---|
| **Turbidity [NTU] non-past.** | 6.1 |
| **Turbidity [NTU] past.** | ***17.9*** |
| **Turbidity [NTU] non-past. after 1 month** | 4.8 |
| **Turbidity [NTU] non-past. after 3 months** | 5.9 |
| **Turbidity [NTU] past. after 1 month** | **20.7** |
| **Turbidity [NTU] past. after 3 months** | *20.2* |

It can be seen that the turbidity (especially after the pasteurization) is significantly higher in comparison to the soft drinks comprising the emulsions of the present invention.

## Claims

1. An emulsion comprising
| | |
|---|---|
| 1.5 to 4 wt-%, | based on the total weight of the emulsion, of at least one carotenoid, chosen from the group consisting of β-carotene and 8'-apo-β-carotenal and |
| 8 to 31 wt-%, | based on the total weight of the emulsion, of an emulsifier mixture, and |
| 3 to 8 wt-%, | based on the total weight of the emulsion, of at least one oil chosen from the group consisting of MCT, coconut oil, corn oil, cottonseed oil, olive oil, palm oil, peanut oil, rapeseed oil, canola oil, safflower oil, sesame oil, soybean oil, sunflower oil, hazelnut oil, almond oil, cashew oil, macadamia oil, mongongo nut oil, pracaxi oil, pecan oil, pine nut oil, pistachio oil, sacha Inchi (Plukenetia volubilis) oil, walnut oil and polyunsaturated fatty acids, and |
| 0 to 1 wt-%, | based on the total weight of the emulsion, of at least one antioxidant chosen from the group consisting of ascorbic acid, tocopherol (synthetic or natural), butylated hydroxytoluene (BHT), butylated hydroxyanisole (BHA), propyl gallate, tert. butyl hydroxyquinoline and ascorbic acid esters of a fatty acid, (preferably dl-alpha-tocopherol), and |
| 56 to 87.5 wt-%, | based on the total weight of the emulsion, of water, |
**characterized in that**
the mixture of emulsifiers comprises
(a) at least one polyoxyethylene sorbitan monofatty acid ester and
(b) at least one other emulsifier having a HLB value of at least 6,
and wherein
(i) the ratio of carotenoid : polyoxyethylene sorbitan monofatty acid ester is 1:5 to 1:6.5 and
(ii) emulsifier (b) is present in amount of 0.5 - 5 wt-%, based on the total weight of the emulsion,
and wherein the mixture of emulsifiers comprises
(I) 80 to 98 wt-%, based on the total weight of the emulsifier mixture, of at least one polyoxyethylene sorbitan monofatty acid ester and
(II) 2 to 20 wt-%, based on the total weight of the emulsifier mixture, of at least one other (not a polyoxyethylene sorbitan monofatty acid) emulsifier with a HLB value of at least 6.

2. An emulsion according to any of the preceding claims, wherein the polyoxyethylene sorbitan monofatty acid of the emulsifier mixture is chosen from the group consisting of polyoxyethylene(20) sorbitan monolaurate, polyoxyethylene(20) sorbitan-monopalmitate, polyoxyethylene(20) sorbitan monostearate and polyoxyethylene(20) sorbitan monooleate.

3. An emulsion according to any of the preceding claims, wherein the emulsifier having a HLB value of at least 6 (preferably at least 6.5, more preferably at least 7) of the emulsifier mixture is chosen from the group consisting of lecithin and polyglycerolesters of fatty acids.

4. An emulsion according to any of the preceding claims, wherein the emulsifier mixture comprises
(a) 80 to 98 wt-%, based on the total weight of the emulsifier mixture, of at least one polyoxyethylene sorbitan monofatty acid ester and
(b) 2 to 20 wt-%, based on the total weight of the emulsifier mixture, of at least one other emulsifier with a HLB value of at least 6.5 (preferably at least 7).

5. An emulsion according to any of the preceding claims, comprising 0.01 to 1 wt-%, preferably 0.5 to 0.8 wt-%, based on the total weight of the emulsion, of at least one antioxidant chosen from the group consisting of ascorbic acid or salts thereof, (synthetic or natural) tocopherol (dl-alpha-tocopherol), butylated hydroxytoluene (BHT), butylated hydroxyanisole (BHA), propyl gallate, tert. butyl hydroxyquinoline and ascorbic acid esters of a fatty acid.

6. An emulsion according to any of the preceding claims, comprising further ingredients such as ethoxyquin, plasticizers, preservatives (such as sorbic acid and its salts), stabilizers, acids (such as citric acid, acetic acid as well as their salts), humectants (such as glycerol, sorbitol, polyethylene glycol) protective colloids, dyes, fragrances, fillers and pH-buffers.

7. Use of at least one emulsion according to any of claims 1 to 6 in a liquid formulation.

8. Use according to claim 7, wherein the liquid formulation is clear and pasteurized.

## Patentansprüche

1. Emulsion, umfassend:
| | |
|---|---|
| 1,5 bis 4 Gew.-%, | bezogen auf das Gesamtgewicht der Emulsion, mindestens eines aus der Gruppe bestehend aus β-Carotin und 8'-Apo-β-carotenal ausgewählten Carotinoids und |
| 8 bis 31 Gew.-%, | bezogen auf das Gesamtgewicht der Emulsion, eines Emulgatorgemisches und |
| 3 bis 8 Gew.-%, | bezogen auf das Gesamtgewicht der Emulsion, mindestens eines aus der Gruppe bestehend aus MCT, Kokosöl, Maisöl, Baumwollsamenöl, Olivenöl, Palmöl, Erdnussöl, Rapsöl, Canolaöl, Distelöl, Sesamöl, Sojaöl, Sonnenblumenöl, Haselnussöl, Mandelöl, Cashewöl, Macadamiaöl, Mongongoöl, Pracaxiöl, Pekannussöl, Pinienkernöl, Pistazienöl, Öl aus Sacha Inchi (Plukenetia volubilis), Walnussöl und mehrfach ungesättigten Fettsäuren ausgewählten Öls und |
| 0 bis 1 Gew.-%, | bezogen auf das Gesamtgewicht der Emulsion, mindestens eines aus der Gruppe bestehend aus Ascorbinsäure, (synthetischem oder natürlichem) Tocopherol, butyliertem |
| | Hydroxytoluol (BHT), butyliertem Hydroxyanisol (BHA), Propylgallat, tert-Butylhydroxychinolin und Ascorbinsäureestern einer Fettsäure (vorzugsweise DL-alpha-Tocopherol) ausgewählten Antioxidans und |
| 56 bis 87,5Gew.-%, | bezogen auf das Gesamtgewicht der Emulsion, Wasser, |
**dadurch gekennzeichnet, dass**
das Emulgatorgemisch
(a) mindestens einen Polyoxyethylensorbitanmonofettsäureester und
(b) mindestens einen weiteren Emulgator mit einem HLB-Wert von mindestens 6
umfasst, und wobei
(i) das Verhältnis von Carotinoid:Polyoxyethylensorbitanmonofettsäuree ster 1:5 bis 1:6,5 beträgt und
(ii) Emulgator (b) in einer Menge von 0,5-5 Gew.-%, bezogen auf das Gesamtgewicht der Emulsion, vorliegt
und wobei das Emulgatorgemisch
(I) 80 bis 98 Gew.-%, bezogen auf das Gesamtgewicht des Emulgatorgemisches, mindestens eines Polyoxyethylensorbitanmonofettsäureesters und
(II) 2 bis 20 Gew.-%, bezogen auf das Gesamtgewicht des Emulgatorgemisches, mindestens eines weiteren (keine Polyoxyethylensorbitanmonofettsäure) Emulgators mit einem HLB-Wert von mindestens 6
umfasst.

2. Emulsion nach einem der vorhergehenden Ansprüche, wobei die Polyoxyethylensorbitanmonofettsäure des Emulgatorgemisches aus der Gruppe bestehend aus Polyoxyethylen(20)sorbitanmonolaurat, Polyoxyethylen(20)sorbitanmonopalmitat, Polyoxyethylen(20)sorbitanmonostearat und Polyoxyethylen(20)sorbitanmonooleat ausgewählt ist.

3. Emulsion nach einem der vorhergehenden Ansprüche, wobei der Emulgator mit einem HLB-Wert von mindestens 6 (vorzugsweise mindestens 6,5, weiter bevorzugt mindestens 7) des Emulgatorgemisches aus der Gruppe bestehend aus Lecithin und Polyglycerolestern von Fettsäuren ausgewählt ist.

4. Emulsion nach einem der vorhergehenden Ansprüche, wobei das Emulgatorgemisch
(a) 80 bis 98 Gew.-%, bezogen auf das Gesamtgewicht des Emulgatorgemisches, mindestens eines Polyoxyethylensorbitanmonofettsäureesters und
(b) 2 bis 20 Gew.-%, bezogen auf das Gesamtgewicht des Emulgatorgemisches, mindestens eines weiteren Emulgators mit einem HLB-Wert von mindestens 6,5 (vorzugsweise mindestens 7)
umfasst.

5. Emulsion nach einem der vorhergehenden Ansprüche, umfassend 0,01 bis 1 Gew.-%, vorzugsweise 0,5 bis 0,8 Gew.-%, bezogen auf das Gesamtgewicht der Emulsion, mindestens eines aus der Gruppe bestehend aus Ascorbinsäure oder Salzen davon, (synthetischem oder natürlichem) Tocopherol (DL-alpha-Tocopherol), butyliertem Hydroxytoluol (BHT), butyliertem Hydroxyanisol (BHA), Propylgallat, tert-Butylhydroxychinolin und Ascorbinsäureestern einer Fettsäure ausgewählten Antioxidans.

6. Emulsion nach einem der vorhergehenden Ansprüche, umfassend weitere Bestandteile wie Ethoxyquin, Weichmacher, Konservierungsmittel (wie Sorbinsäure und ihre Salze), Stabilisatoren, Säuren (wie Citronensäure, Essigsäure sowie deren Salze), Feuchthaltemittel (wie Glycerin, Sorbit, Polyethylenglykol), Schutzkolloide, Farbstoffe, Duftstoffe, Füllstoffe und pH-Puffer.

7. Verwendung mindestens einer Emulsion nach einem der Ansprüche 1 bis 6 in einer flüssigen Formulierung.

8. Verwendung nach Anspruch 7, wobei die flüssige Formulierung klar und pasteurisiert ist.

## Revendications

1. Émulsion comprenant
1,5 à 4 % en poids, relativement au poids total de l'émulsion, d'au moins un caroténoïde, choisi dans le groupe constitué du β-carotène et du 8'-apo-β-carotène et
8 à 31 % en poids, relativement au poids total de l'émulsion, d'un mélange d'émulsifiants, et
3 à 8 % en poids, relativement au poids total de l'émulsion, d'au moins une huile choisie dans le groupe constitué de TCM, de l'huile de coco, de l'huile de maïs, de l'huile de coton, de l'huile d'olive, de l'huile de palme, de l'huile d'arachide, de l'huile de colza, de l'huile de canola, de l'huile de carthame, de l'huile de sésame, de l'huile de soja, de l'huile de tournesol, de l'huile de noisette, de l'huile d'amande, de l'huile de cajou, de l'huile de macadamia, de l'huile de noix de mongogo, de l'huile de pracaxi, de l'huile de pécan, de l'huile de pignon de pin, de l'huile de pistache, de l'huile d'Inca inchi (*Plukenetia volubilis*), de l'huile de noix et d'acides gras polyinsaturés, et
0 à 1 % en poids, relativement au poids total de l'émulsion, d'au moins un antioxydant choisi dans le groupe constitué de l'acide ascorbique, du tocophérol (synthétique ou naturel), de l'hydroxytoluène butylé (BHT), de l'hydroxyanisole butylé (BHA), du gallate de propyle, de la tert-butylhydroxyquinoline et d'esters de l'acide ascorbique d'un acide gras (préférablement le dl-alpha-tocophérol), et
56 à 87,5 % en poids, relativement au poids total de l'émulsion, d'eau,
**caractérisée en ce que**
le mélange d'émulsifiants comprend
(a) au moins un ester de monoacide gras de polyoxyéthylène sorbitane et
(b) au moins un autre émulsifiant ayant une valeur d'équilibre hydrophile/lipophile d'au moins 6,
et dans laquelle
(i) le rapport caroténoïde: ester de monoacide gras de polyoxyéthylène sorbitane est de 1:5 à 1:6,5 et
(ii) l'émulsifiant b) est présent dans une quantité de 0,5 à 5 % en poids, relativement au poids total de l'émulsion,
et dans laquelle le mélange d'émulsifiants comprend (I) 80 à 98 % en poids, relativement au poids total du mélange d'émulsifiants, d'au moins un ester de monoacide gras de polyoxyéthylène sorbitane et
(II) 2 à 20 % en poids, relativement au poids total du mélange d'émulsifiants, d'au moins un autre émulsifiant (qui n'est pas un monoacide gras de polyoxyéthylène sorbitane) ayant une valeur d'équilibre hydrophile/lipophile d'au moins 6.

2. Émulsion selon l'une quelconque des revendications précédentes, dans laquelle le monoacide gras de polyoxyéthylène sorbitane du mélange d'émulsifiants est choisi dans le groupe constitué du monolaurate de polyoxyéthylène(20) sorbitane, du monopalmitate de polyoxyéthylène(20) sorbitane, du monostéarate de polyoxyéthylène(20) sorbitane et du monooléate de polyoxyéthylène(20) sorbitane.

3. Émulsion selon l'une quelconque des revendications précédentes, dans laquelle l'émulsifiant ayant une valeur d'équilibre hydrophile/lipophile d'au moins 6 (préférablement d'au moins 6,5, plus préférablement d'au moins 7) du mélange d'émulsifiants est choisi dans le groupe constitué de la lécithine et de polyglycérolesters d'acides gras.

4. Émulsion selon l'une quelconque des revendications précédentes, dans laquelle le mélange d'émulsifiants comprend
(a) 80 à 98 % en poids, relativement au poids total du mélange d'émulsifiants, d'au moins un ester de monoacide gras de polyoxyéthylène sorbitane et
(b) 2 à 20 % en poids, relativement au poids total du mélange d'émulsifiants, d'au moins un autre émulsifiant ayant une valeur d'équilibre hydrophile/lipophile d'au moins 6,5 (préférablement d'au moins 7).

5. Émulsion selon l'une quelconque des revendications précédentes, comprenant 0,01 à 1 % en poids, préférablement de 0,5 à 0,8 % en poids, relativement au poids total de l'émulsion, d'au moins un antioxydant choisi dans le groupe constitué de l'acide ascorbique (synthétique ou naturel) ou de sels de celui-ci, du tocophérol (dl-alpha-tocophérol), de l'hydroxytoluène butylé (BHT), de l'hydroxyanisole butylé (BHA), du gallate de propyle, de la tert-butylhydroxyquinoline et d'esters de l'acide ascorbique d'un acide gras.

6. Émulsion selon l'une quelconque des revendications précédentes, comprenant d'autres ingrédients tels que l'éthoxyquine, des plastifiants, des conservateurs (tels que l'acide sorbique et ses sels), des stabilisants, des acides (tels que l'acide citrique, l'acide acétique ainsi que leurs sels), des humectants (tels que le glycérol, le sorbitol, le polyéthylène glycol), des colloïdes protecteurs, des colorants, des parfums, des charges et des tampons de pH.

7. Utilisation d'au moins une émulsion selon l'une quelconque des revendications 1 à 6 dans une formulation liquide.

8. Utilisation selon la revendication 7, dans laquelle la formulation liquide est limpide et pasteurisée.
